Europäisches Patentamt

European Patent Office

Office européen des brevets

(11) Publication number: **0 520 663 A2**

# EUROPEAN PATENT APPLICATION

(21) Application number: **92305479.5**

(22) Date of filing: **15.06.92**

(51) Int. Cl.5: **H02M 3/156**

(30) Priority: **27.06.91 US 721984**

(43) Date of publication of application:
**30.12.92 Bulletin 92/53**

(84) Designated Contracting States:
**DE FR GB IT**

(71) Applicant: **SGS-THOMSON MICROELECTRONICS, INC.**
**1310 Electronics Drive**
**Carrollton Texas 75006(US)**

(72) Inventor: **Hopkins, Thomas Lea R.**
**8025 East Krail**
**Scottsdale, Arizona 85250(US)**

(74) Representative: **Palmer, Roger et al**
**PAGE, WHITE & FARRER 54 Doughty Street**
**London WC1N 2LS(GB)**

(54) **Circuit to improve stability of high duty cycle current controlled PWM regulators.**

(57) A method and a circuit for reducing the likelihood of a current regulating circuit which regulates current in a series current path for connection to an inductor, such as a coil of a DC motor, from synchronizing with subharmonics of the fundamental frequency to which synchronization is desired includes a switch for controlling current in a series current path, an oscillator circuit for providing timing signals, a flip-flop connected to receive an the timing signals from the oscillator circuit for providing an output to control the switch to complete the series current path, and a circuit responsive to a current flowing in the series current path to provide a signal to the flip-flop to control the switch to open the series current path when the current reaches a predetermined level. A correction circuit is provided for generating a timing pulse in synchronism with the oscillator circuit, connected to control the switch if the signal from the flop-flop does not.

FIG. 1

This invention relates to improvements in current controlling regulator circuits, and more particularly to improvements in methods and circuits for reducing the likelihood of a current controlling regulator circuit of the type which senses the level of the current controlled locking onto a subharmonic frequency of the desired operating or switching frequency.

Many applications exist in which the current is switchably regulated, such as in motor controls, DC to DC converters operating in a current mode, and the like. For example, in many motor control applications, current is switchably controlled through the inductive coils of the motor to control its rotation.

However, in such circuits, especially when the duty cycle of the current on time is high, as may be encountered in fixed frequency pulse width modulated (PWM) motor current control circuits, it is common for the output current to drop and synchronize to a subharmonic of the fundamental switching frequency. One of the reasons for this problem is due to the fact that the current which flows in the motor coils is not constant, and does not necessarily reach sufficient switching levels at the switching times indicated by the desired timing or switching signals.

One method which has been used to attempt to overcome this and improve the output current regulation is through the use of slope compensation signals. However, such slope compensating techniques have not been successfully used in applications involving power factor correction, since the output voltage and hence the falling slope, is not constant.

In light of the above, therefore, it is an object of the invention to provide a circuit which reduces the likelihood of a current regulating circuit from synchronizing upon subharmonics of the fundamental frequency to which synchronization is desired.

It is another object of the invention to provide a circuit of the type described which can be employed in applications involving power factor correction.

It is another object of the invention to provide a circuit of the type described which can be employed in polyphase DC motor control applications.

It is an object of the invention to provide a method for reducing the likelihood that a current regulating circuit will synchronize to subharmonics of the fundamental frequency to which synchronization is desired.

It is another object of the invention to provide a motor control system in which the likelihood is reduced that the current of the motor synchronized to a subharmonic of a desired operating frequency.

These and other object, features and advantages of the invention will be appreciated from the following detailed description, when read in conjunction with the accompanying drawing and appended claims.

In a broad aspect of the invention, a circuit is provided for reducing the likelihood of a current regulating circuit which regulates current in a series current path from synchronizing with subharmonics of the fundamental frequency to which synchronization is desired includes a switch for controlling current in a series current path, an oscillator circuit for providing timing signals, a flip-flop connected to receive the timing signals from the oscillator, a circuit for providing an output to control the switch to complete the series current path, and a circuit responsive to a current flowing in the series current path to provide a signal to the flip-flop to control the switch to open the series current path when the current reaches a predetermined level. A correction circuit is provided for generating a timing pulse in synchronism with the oscillator circuit, connected to control the switch if the signal from the flop-flop does not.

In another broad aspect of the invention, a method for reducing the likelihood of a current regulating circuit which regulates current in a series current path from synchronizing with subharmonics of the fundamental frequency to which synchronization is desired is presented. The method includes the steps of providing a switch in said series current path responsive to signals, and providing a circuit having timing cycle signals to control said switch, providing a circuit responsive to a current level in said current path for operating said switch, and providing a circuit to provide digital signals introduced during each timing cycle to limit the output duty cycle by operating said switch at an end of a desired maximum duty cycle, whereby the current in said series current path is forced to decay in each timing cycle and cause the switching to be maintained at the fundamental frequency of said oscillator circuit.

In another broad aspect of the invention, a method for operating a polyphase DC motor is presented. The method includes the steps of providing a circuit for regulating a current in a series current path of the polyphase DC motor, the circuit defining an operating frequency at which current is switched in the series current path, responsive to a timing signal and a current level in the series current path, and providing a circuit to provide digital signals during each timing cycle of the timing signal to limit the output duty cycle of the current in the series current path, by operating a switch in the series current path at an end of a desired maximum duty cycle.

The invention is illustrated in the accompanying drawings, in which:

Figure 1 is an electrical schematic diagram of a circuit for controlling the current in a motor circuit, in accordance with the principles of a preferred embodiment of the invention.

Figure 2 is waveform patterns showing an unsynchronized relationship between the current in the inductive load and the regulator circuit, in accordance with a possible prior art operating mode.

And Figure 3 is waveform patterns of the signals at various points in the circuit represented by the schematic diagram of Figure 1, in accordance with a preferred embodiment of the invention, in which the current in the inductive load is synchronized with the frequency of the regulator circuit.

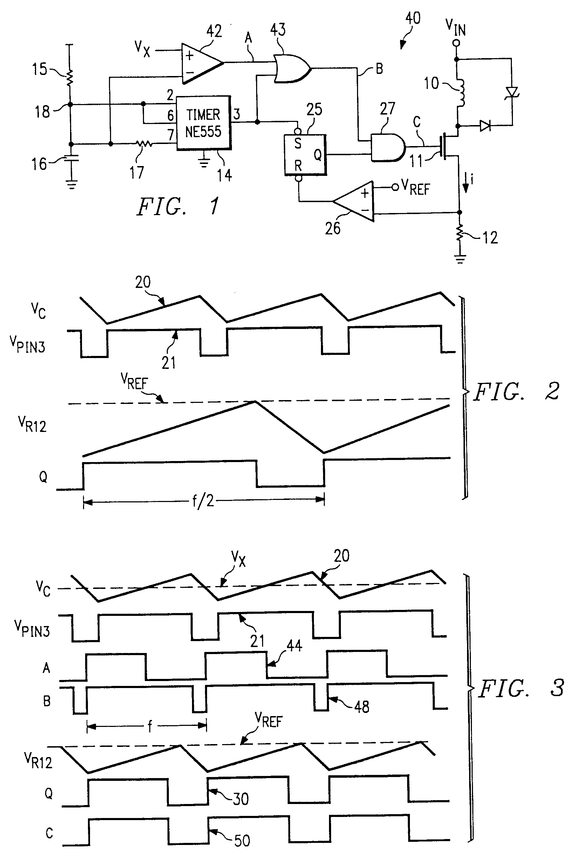

An electrical schematic diagram representing a circuit, in accordance with a preferred embodiment of the invention is illustrated in Figure 1, in a motor control environment. It will be appreciated that the invention has wide applications, and that it is not intended to limit the application of the invention to motor control circuits, such circuits being described for purposes of illustration and convenience. Those skilled in the art will recognize the application of the principles of the invention in other such applications as DC to DC converters, in circuits having high duty cycles such as in PWM motor control regulation circuits, noise masking circuits, or the like.

Accordingly, with respect to the motor control circuit of Figure 1, it will become apparent that the circuit will force the current in the inductors of the motor to decay in each cycle and cause the switching to properly lock at the fundamental frequency.

As mentioned, the compensation circuit according to one embodiment of the invention can be used to control the current in a motor system, such as typically found in polyphase DC motors which are typically operated as pulse width modulated (PWM) current sources. One inductor 10 of such motor through which a current, i, flows is shown in Figure 1, however, it is understood that a number of similar inductors will be provided in polyphase motors, each of which will be compensated in accordance with the techniques described herein.

Current is controlled through the coil 10 by a switch, for example, a transistor, such as FET 11, which has a source drain path in a series path between the coil 10 and a resistor 12 to ground. The voltage to the coil 10 is provided by a power supply at $V_{IN}$.

An oscillator circuit is provided to control the FET 11, and includes an oscillator or timer chip, such as a widely available NE555 type timer chip 14. The frequency of the timer chip 14 is controlled by RC time constants provided by a resistor 15 and capacitor 16 to produce an positively sloping voltage, and a resistor 17 which operates in conjunction with the capacitor 16 to produce a negatively sloping voltage. Thus, the voltage on the upper capacitor node 18 will be as shown by curve 20 in Figure 3, and will have a fundamental frequency with which it will be desired to synchronize the output of the circuit. It is noted that in the particular circuit configuration illustrated, for proper operation the value of resistor 15 is much larger than the value of resistor 17, in order to provide the proper duty cycle for the timer chip 14.

The signal on node 18 is applied to the input of the timer chip 14 (for example to pins 2, 6, and 7 of an NE555 type timer chip), and the timer chip 14 produces an output, $V_{PIN3}$. The output $V_{PIN3}$, seen as curve 21 in Figure 3, is connected to an inverted set "S" input of an R-S flip-flop 25. In like manner, an inverted reset "R" input of the R-S flip-flop 25 receives an output of a voltage comparator 26, which samples the voltage developed on the resistor 12 on account of the current flowing through the coil 10. In addition, the comparator 26 receives a reference voltage $V_{REF}$, to compare the Voltage on the bottom of the coil 10 with the reference voltage, $V_{REF}$, to set the peak current value.

Finally, the Q output of the R-S flip-flop 25 controls the gate of the current controlling transistor 11, through the AND gate 27 (added in accordance with an embodiment of the invention). The waveform 30 of the Q output of the R-S flip-flop 25 is shown in Figure 3. The circuit described to this point is similar to the current control circuits of the prior art.

In its ideal operation, during PWM mode, the current, i, is sensed across the sense resistor 12, and is compared to the reference voltage, $V_{REF}$, for example corresponding to a predetermined current in the coils 10. As the voltage on the sense resistor 12 reaches the reference voltage, $V_{REF}$, the output of the comparator 26 flips its output to reset the flip-flop 25 and shuts off the transistor switch 11. At a later time determined by the oscillator circuit 14, the flip-flop 25 is set, again turning on the transistor switch 22 back on again. The current, i, then ramps up and the cycle repeats itself.

The waveform 21 shows the set of the flip-flop. It can be seen that in the event the magnitude of the current, i, flowing through the coil 10 has not reached a sufficient level to turn on the comparator 26, the R-S flip-flop 25 will not reset at the time when the output of the timer chip 14 goes low. When the output of the timer chip 14 goes low, the R-S flip-flop 25 is still set, and the Q output will not change state from the previously assumed set state resulting from the previously occurring low transition of the output of the timer chip 14. Thus, it is possible for the circuit to synchronize on a subharmonic of the frequency of the output from the timer chip 14. This condition is shown in Figure 2, in which the current, i, in the inductive load is synchronized to a first subharmonic of the timer frequency, seen at the output, Q, of the flip-flop 25.

This possibility can be avoided by the correction circuit 40, shown in Figure 1. The correction circuit 40 includes an comparator 42 which compares the voltage on the node 18 on top of the capacitor 16 with a reference voltage $V_x$, to produce an output on line "A" which is connected to an input of an OR gate 43. The other input of the OR gate 43 is connected to the output of the timer chip 14. Thus, the inputs to the comparator 42 causes the comparator 42 to change output states when the voltage on the node 18 exceeds the reference voltage $V_x$. The waveform 44 of the output of the comparator 42 on line "A" is shown in Figure 2.

Furthermore, the output on line "B" from the OR gate 43 is high when either the signal on line "A", or the output from the timer chip 14 is high. The resulting waveform 48 is shown in Figure 2. Thus, when the AND gate 27 combines the signal on line "B" with the output Q of the R-S flip-flop 25, if the output Q has not changed state, indicating the possibility that the circuit might be undesirably synchronizing to a subharmonic frequency, the output from the gate 27 will change to a low state, interrupting the current, i, flowing through the coil 10.

Thus, by virtue of the correction circuit 40, shown in Figure 1, in the system, the output duty cycle is limited to a value less than 100%, determined by $V_x$ and the slope of the capacitor signal. Moreover, if this time is less than the output synchronization pulse developed at the output of the timer chip 14, the difference can also be used to set a minimum on the time that can be used to mask noise, such as noise generated by turn on of a power switch, a commonly encountered situation, or the like.

Thus, it can be seen that in any cycle during which the current has not increased up to the regulation point, the maximum duty cycle limit will force the output off for a short time, as can be seen from the curve 50 in Figure 3, allowing the current, i, in the inductor 10 to decay and enhancing the probability the circuit will synchronize at the fundamental frequency.

Although the invention has been described and illustrated with a certain degree of particularity, it is understood that the present disclosure has been made only by way of example, and that numerous changes in the combination and arrangement of parts can be resorted to by those skilled in the art without departing from the spirit and scope of the invention, as hereinafter claimed.

**Claims**

1. A circuit for use in conjunction with an inductor to assure that the output of a current regulator synchronizes to a predetermined frequency, comprising:

   a current path for connection to the inductor;

   a current regulator circuit to switchably control said current in said current path;

   and a circuit to limit the duty cycle of an output of the current regulator to cause the current in said current path to decay in each cycle.

2. The circuit of claim 1 wherein said current path, when connected to the inductor, comprises the inductor, a switch and a resistor, connected in series.

3. The circuit of claim 2 wherein said switch provides a means by which current in said current path is switchably controlled, and which is controlled by said current regulator circuit.

4. The circuit of claim 3 wherein said inductor is at least one coil of a polyphase DC motor.

5. The circuit of claim 1 wherein said current regulator circuit comprises a timer circuit having a frequency during each cycle of which said current in said current path is desired to be switched on and off.

6. The circuit of claim 5 wherein said timer circuit comprises a flip-flop for switchably controlling said current in said current path, an oscillator for periodically setting said flip-flop, and a feed back path for resetting said flip-flop when the current in said current path reaches a predetermined level.

7. A circuit for reducing the likelihood of a current regulating circuit which regulates current in a series current path for connection to an inductor from synchronizing with subharmonics of the fundamental frequency to which synchronization is desired, comprising:

   a switch for controlling current in said series current path;

   an oscillator circuit for providing timing signals;

   a flip-Flop connected to receive said timing signals from said oscillator circuit for providing an output to control said switch to complete said series current path;

   a circuit responsive to a current flowing in said series current path to provide a signal to said flip-flop to control said switch to open said series current path when said current reaches a predetermined level;

a correction circuit for generating a timing pulse in synchronism with said oscillator circuit, connected to control said switch in conjunction with said output of said flip-flop.

8. The circuit of claim 7 wherein said timing pulse is a digital signal introduced during each timing cycle to limit the output duty cycle, whereby the current in said series current path is forced to decay in each timing cycle and cause the switching to be maintained at the fundamental frequency of said oscillator circuit.

9. The circuit of claim 7 wherein said switch for controlling current in a series current path is an FET.

10. The circuit of claim 9 wherein said series current path, when connected to said inductor, comprises said inducator, a resistor, and a current path of said FET connected in series between a voltage source and a reference potential.

11. The circuit of claim 10 wherein said inductor is at least a part of a polyphase DC motor.

12. The circuit of claim 7 wherein the frequency of said oscillator circuit is provided by an RC network, comprising a capacitor and a resistor to control the charge time and a second resistor to control the discharge time of said capacitor.

13. The circuit of claim 7 wherein said correction circuit for generating a timing pulse in synchronism with said oscillator circuit comprises a comparator for comparing a voltage of the RC network with a reference voltage to produce an output,

an OR gate connected to receive said output of said comparator on one input terminal, and to receive said output of said timing circuit on another input terminal, for producing a comparison output,

and an AND gate, connected to receive said comparison output from said OR gate on one input terminal, and to receive an output of said flip-flop on another input terminal, for producing an output connected to control said switch.

14. A method for reducing the likelihood of a current regulating circuit which regulates current in a series current path for connection to an inductor from synchronizing with subharmonics of the fundamental frequency to which synchronization is desired, comprising:

providing a switch in said series current path responsive to signals;

providing a circuit having timing cycle signals to control said switch;

providing a circuit responsive to a current level in said current path for operating said switch, and

providing a circuit to provide digital signals introduced during each timing cycle to limit the output duty cycle by operating said switch at an end of a desired maximum duty cycle, whereby the current in said series current path is forced to decay in each timing cycle and cause the switching to be maintained at the fundamental frequency of said oscillator circuit.

15. The method of claim 14 wherein said step of providing a circuit having timing cycle signals comprises providing a circuit which has a frequency during each cycle of which said current in said current path is desired to be switched on and off.

16. The method of claim 15 wherein said step of providing a circuit having a timing cycle comprises the step of providing a circuit having a flip-flop for switchably controlling said current in said current path, an oscillator for periodically setting said flip-flop, and wherein said step of providing a circuit responsive to a current level in said current comprises the step of providing a feed back path for resetting said flip-flop when the current in said current path reaches a predetermined level.

17. The circuit of claim 7 wherein the frequency of said oscillator circuit is provided by an RC network, comprising a capacitor and a resistor to control the charge time and a second resistor to control the discharge time of said capacitor.

18. The circuit or method of claim 17 wherein said timing signals from said oscillator circuit are connected to set said R-S flip-flop, and said signal provided by said circuit responsive to a current flowing in said series current path is connected to reset said R-S flip-flop.

19. The circuit of claim 6 or the method of claim 18 wherein said circuit to limit the duty cycle limits the duty cycle of said timer circuit to establish a maximum permitted duty cycle regardless of current levels in said current path.

20. The method of claim 14 wherein said step of providing a series current path comprises providing a resistor connected in series with said inductor between a voltage source and a reference potential.

21. The method of claim 20 wherein said step of providing a switch comprises providing an FET having a current path in series with said inductor and said resistor.

22. A method for operating a polyphase DC motor, comprising:

providing a circuit for regulating a current in a series current path including at least one coil of said polyphase DC motor, said circuit defining an operating frequency at which current is switched in said series current path, responsive to a timing signal and a current level in said series current path;

and providing a circuit to provide digital signals during each timing cycle of said timing signal to limit the output duty cycle of the current in said series current path, by operating a switch in said series current path at an end of a desired maximum duty cycle.

FIG. 1

FIG. 2

FIG. 3